# EUROPÄISCHE PATENTSCHRIFT

(11) **EP 2 820 294 B1**
(45) Veröffentlichungstag und Bekanntmachung des Hinweises auf die Patenterteilung: **11.04.2018**
(21) Anmeldenummer: 13704130.7
(22) Anmeldetag: 15.02.2013
(51) Int. Cl.: F03D 13/20, F03D 13/40, F03D 80/80

(54) **WINDENERGIEANLAGE MIT BRANDSCHUTZMODUL FÜR TRANSFORMATOR IM TURM**
WIND POWER PLANT HAVING A FIRE PROTECTION MODULE FOR A TRANSFORMER IN THE TOWER
ÉOLIENNE ÉQUIPÉE D'UN MODULE DE PROTECTION CONTRE LE FEU POUR UN TRANSFORMATEUR MONTÉ DANS LE MÂT

(30) Priorität: 28.02.2012 DE 102012202979
(43) Veröffentlichungstag der Anmeldung: 07.01.2015
(73) Patentinhaber: Wobben Properties GmbH, 26607 Aurich (DE)
(72) Erfinder: HÖLSCHER, Norbert, 26607 Aurich (DE); BRÄSKE, Mischa, 26725 Emden (DE)
(74) Vertreter: Eisenführ Speiser
(86) Internationale Anmeldenummer: PCT/EP2013/053061
(87) Internationale Veröffentlichungsnummer: WO 2013/127643

(56) Entgegenhaltungen:
- EP-A1- 2 278 160
- WO-A1-2010/015651
- DE-A1-102008 035 350

## Beschreibung

Die vorliegende Erfindung betrifft eine Windenergieanlage.

Typischerweise weist eine Windenergieanlage im unteren Bereich des Turms oder um den Turm herum einen Leistungsschrank mit einem Umrichter sowie einen Transformator auf. Die Leistungsschränke und die Transformatoren müssen über einen entsprechenden Brandschutz verfügen.

Das Deutsche Patent- und Markenamt hat in der prioritätsbegründenden Anmeldung das Dokument DE 103 10 036 A1 recherchiert. Weiterer Stand der Technik ist bekannt aus WO 2010015651 A1 und DE 102008035350 A1.

Es ist somit eine Aufgabe der vorliegenden Erfindung, eine Windenergieanlage mit einem verbesserten Brandschutz vorzusehen.

Diese Aufgabe wird durch eine Windenergieanlage nach Anspruch 1 gelöst.

Somit wird eine Windenergieanlage mit einem Turm mit mindestens einem unteren Turmsegment und einem vorab gefertigten Brandschutzmodul zur brandsicheren Aufnahme eines Transformators vorgesehen. Das Brandschutzmodul ist innerhalb des unteren Turmsegments platziert.

Das Brandschutzmodul dient dazu, einen in dem Modul entstandenen Brand zumindest zeitweilig innerhalb des Moduls zu begrenzen. Damit kann erreicht werden, dass das Modul zumindest zeitweilig thermisch von dem Rest der Windenergieanlage entkoppelt ist.

Gemäß einem Aspekt der vorliegenden Erfindung weist das Brandschutzmodul eine erste Öffnung für das Servicepersonal und eine zweite Öffnung für einen Austausch des Transformators auf.

Gemäß einem weiteren Aspekt der vorliegenden Erfindung weist das Brandschutzmodul mindestens einen Brandschutzabschluss für elektrische Kabel und/oder ein elektrisches Stromschienensystem auf.

Gemäß einem weiteren Aspekt der vorliegenden Erfindung weist das Brandschutzmodul ein Transformator-Transportschienensystem für den Austausch des Transformators auf. Das Brandschutzmodul weist ein Transportsicherungssystem zur Sicherung des Transformators während eines Transports auf.

Das Brandschutzmodul ist aus Beton gefertigt und wird Betonfertigteil hergestellt.

Somit wird eine Windenergieanlage mit einem Turm vorgesehen, wobei im Bereich des Turms ein vorab gefertigtes Brandschutzmodul zur Aufnahme eines Transformators vorgesehen ist, wobei Öffnungen bzw. Türen in dem Modul derart verschlossen werden können, dass der benötigte Brandschutz sichergestellt werden kann.

Das Modul ist insbesondere als ein Brandschutzmodul ausgestaltet und dient der Aufnahme eines Transformators. Der Transformator weist eine Ausgangsspannung von größer als 1000 Volt, d. h. eine Mittelspannung auf. Das Brandschutzmodul weist optional zwei Türen auf, welche brandgeschützt sind. Die Türen können ferner optional drucksicher sein, so dass sie bei einer Explosion im Inneren des Brandschutzmoduls noch halten. Das Brandschutzmodul wird vorzugsweise zusammen mit dem Transformator im Werk vorab gefertigt und als eine Einheit zum Aufstellungsort transportiert. Das Brandschutzmodul weist vorzugsweise eine Tür für Servicepersonal und eine Tür zum Austauschen des Transformators auf. In dem Brandschutzmodul kann ein Schienensystem zum Austauschen des Transformators vorgesehen sein. Das Schienensystem kann eine Transformatortransportsicherung aufweisen, welche beim Transport des Brandschutzmoduls aktiviert wird. Optional kann das Brandschutzmodul eine Ölwanne unterhalb des Transformators aufweisen.

Zusätzlich oder alternativ zu dem Transformator kann eine Leistungselektronikeinheit in dem Brandschutzmodul vorgesehen sein.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine perspektivische Ansicht einer Windenergieanlage gemäß der Erfindung,
- Fig. 2A bis 2D: zeigen jeweils verschiedene Ansichten eines unteren Abschnitts eines Turms einer Windenergieanlage von Fig. 1,
- Fig. 3 und 4: zeigen jeweils eine schematische Schnittansicht eines Brandschutzmoduls gemäß der Erfindung, und
- Fig. 5 und 6: zeigen jeweils eine Schnittansicht eines Brandschutzmoduls gemäß der Erfindung.

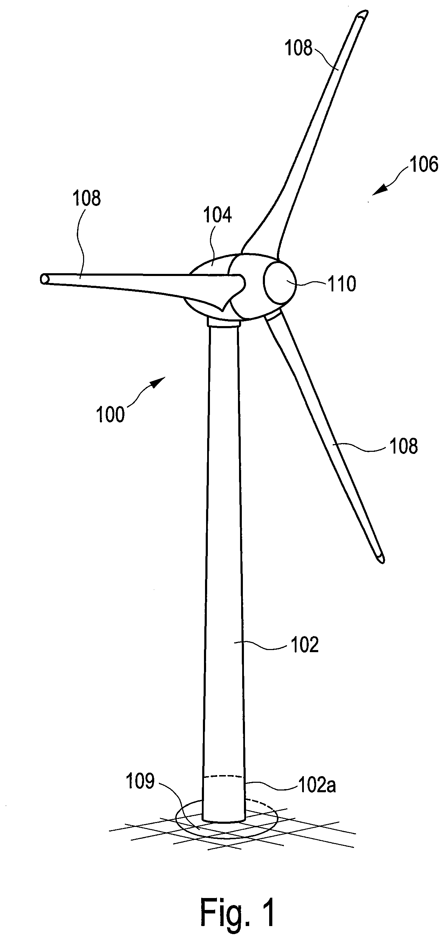

Fig. 1 zeigt eine Windenergieanlage 100 mit einem Turm 102 (mit einem unteren Turmsegment 102a) und einer Gondel 104. An der Gondel 104 ist ein Rotor 106 mit z. B. drei Rotorblättern 108 und einem Spinner 110 angeordnet. Der Rotor 106 wird im Betrieb durch den Wind in eine Drehbewegung versetzt und treibt dadurch einen elektrischen Generator in der Gondel 104 an, um elektrische Energie zu erzeugen. Der Turm 102 mit dem unteren Turmsegment 102a steht auf einem Fundament 200.

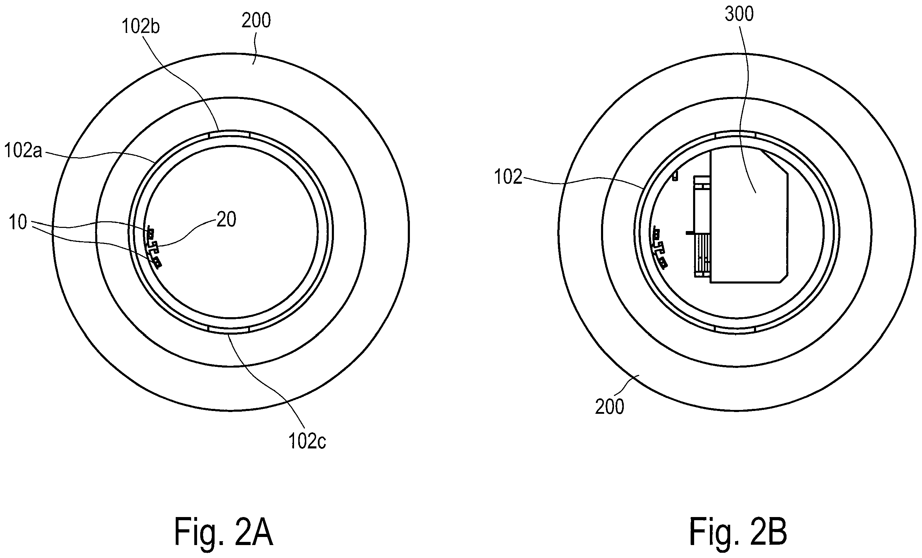

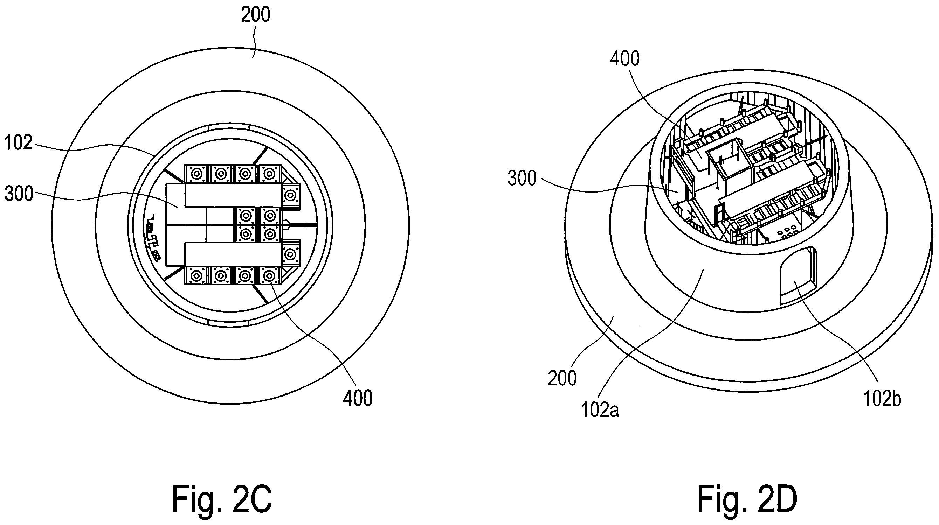

Die Fig. 2A bis 2D zeigen verschiedene schematische Ansichten eines unteren Abschnitts eines Turms einer Windenergieanlage gemäß einem ersten Ausführungsbeispiel. Ein unteres Turmsegment 102a eines Turms 102 einer Windenergieanlage 100 ist auf einem (Beton-) Fundament 200 vorgesehen. Das untere Turmsegment 102a kann eine erste und zweite Tür 102b, 102c sowie Kabel 10 und eine Steigleiter 20 aufweisen. Im Inneren des unteren Turmsegments 102a kann ein Brandschutzmodul 300 vorgesehen sein. Auf dem Dach des Brandschutzmoduls 300 können verschiedene Leistungsschränke 400 vorgesehen sein. Die Leistungsschränke 400 können mindestens einen Umrichter sowie weitere Leistungselektronikeinheiten aufweisen.

In Fig. 2D ist eine perspektivische Ansicht des unteren Turmsegments der Windenergieanlage gezeigt. Das untere Segment 102a des Turms der Windenergieanlage ist auf einem Fundament 200 vorgesehen und weist eine erste und zweite Tür 102b, 102c auf. Im Inneren des unteren Turmsegments 102a ist ein Brandschutzmodul 300 vorgesehen. Auf dem Dach des Brandschutzmoduls können Leistungsschränke 400 mit Umrichtern und weiteren Leistungselektronikeinheiten vorgesehen sein.

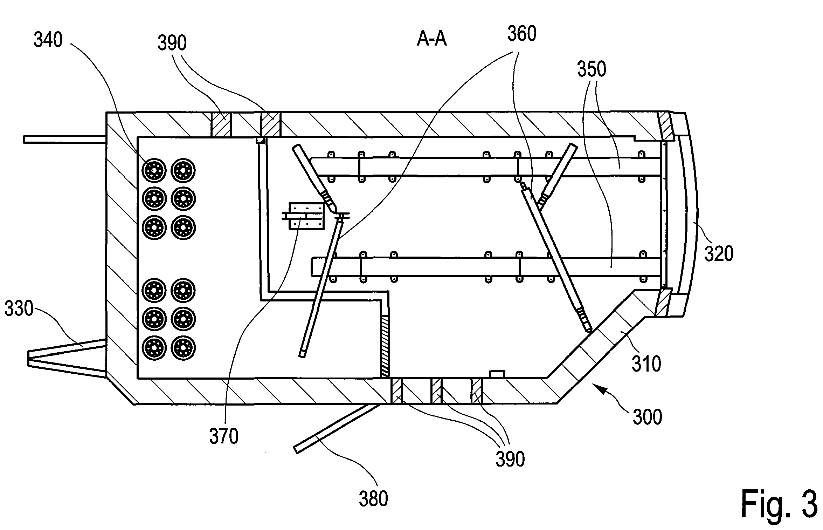

Fig. 3 zeigt eine schematische Ansicht eines Brandschutzmoduls gemäß einem zweiten Ausführungsbeispiel. Das Brandschutzmodul 300 weist eine erste und zweite Tür 320, 330 auf. Die erste Tür 320 kann dazu verwendet werden, einen sich in dem Brandschutzmodul 300 befindlichen Transformator zu tauschen. Die zweite Tür 330 kann vom Servicepersonal dazu verwendet werden, die Schaltanlage in dem Brandschutzmodul 300 zu betreten. Das Brandschutzmodul 300 weist optional an seinem Boden Transformator-Führungsschienen 350, eine Umlenkrolle 370 sowie Transformator-Transportsicherungen 360 auf. Ferner können mehrere Brandschutzabschlüsse 390 in den Wänden des Brandschutzmoduls vorgesehen sein. Diese Brandschutzabschlüsse 390 dienen dazu, eine elektrische Verbindung zwischen dem Inneren und dem Äußeren des Brandschutzmoduls 300 vorzusehen. Die Transformatorführungsschienen 350 dienen dazu, dass ein Transformator entlang der Schienen beispielsweise zu einem Austausch bewegt werden kann. Die Transformator-Transportsicherungen 360 müssen lediglich beim Transport des Brandschutzmoduls 300 an dem Transformator 500 befestigt werden.

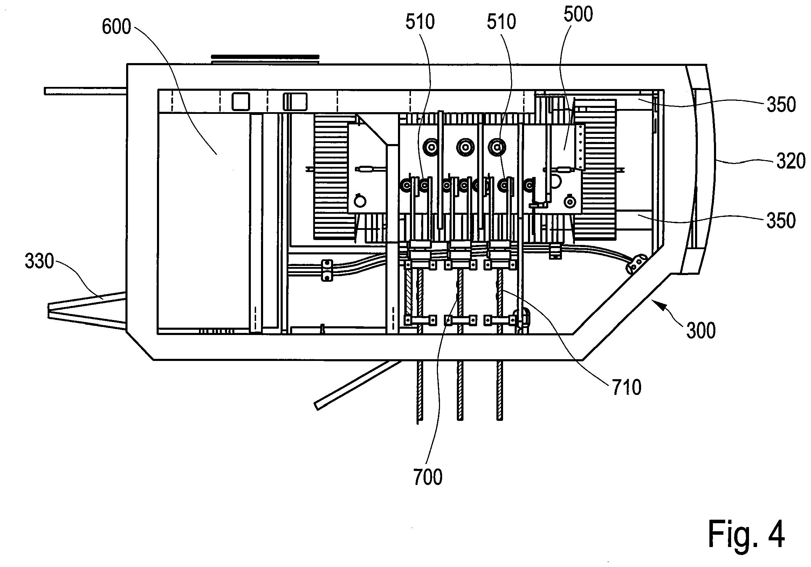

Fig. 4 zeigt eine schematische Darstellung des Brandschutzmoduls 300 zusammen mit einem Transformator 500 gemäß dem zweiten Ausführungsbeispiel der Erfindung. Der Transformator 500 ist auf den Schienen 350 platziert. Der Transformator 500 weist mehrere elektrische Anschlüsse 510 auf, welche jeweils mit einem ersten Ende 710 eines Stromschienensystems 700 elektrisch gekoppelt werden.

Innerhalb des Brandschutzmoduls 300 ist eine erste und zweite Tür 320, 330 vorgesehen, wobei der Transformator 500 durch die erste Tür 320 demontiert werden kann bzw. abtransportiert wird.

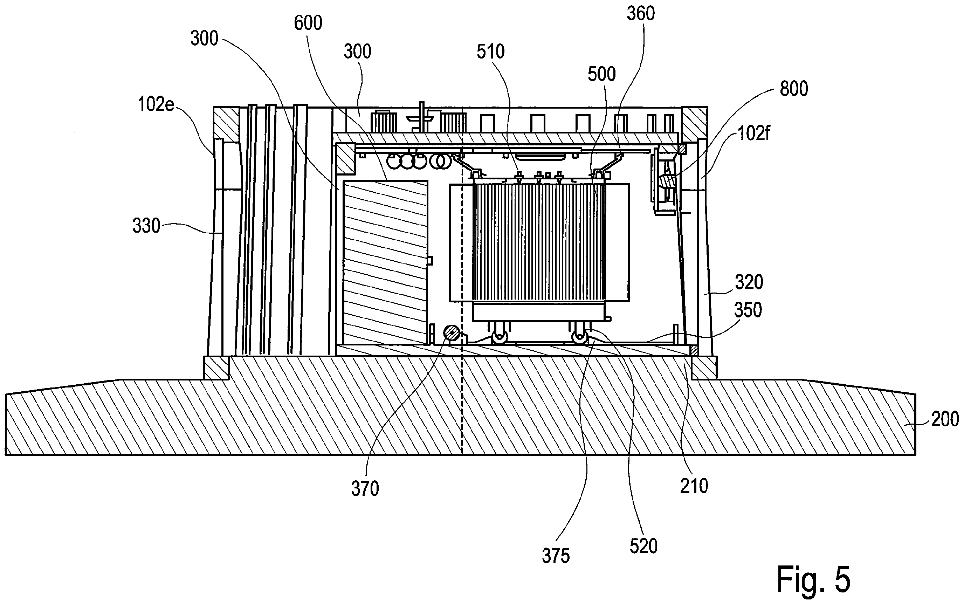

Fig. 5 zeigt eine Schnittansicht eines unteren Endes eines Turms einer Windenergieanlage mit einem Brandschutzmodul gemäß einem dritten Ausführungsbeispiel, welches auf dem ersten oder zweiten Ausführungsbeispiel beruhen kann. Das untere Ende 102a eines unteren Turmsegments 102 ist auf einem Fundament 200 platziert. In dem unteren Turmsegment 102a sind zwei Öffnungen 102e und 102f vorgesehen. Die erste Öffnung 102f dient dazu, einen Transformator 500 abtransportieren zu können, und die zweite Öffnung 102e dient dem Zugang von Servicepersonal. Das Brandschutzmodul 300 kann auf einem oberen Ende 210 des Fundaments 200 platziert werden. Das Brandschutzmodul 300 kann eine erste und zweite Tür 320, 330, eine Transformatorführungsschiene 350, eine Umlenkrolle 370 und optional eine Transformatorrollsperre 375 aufweisen. Auf dem Schienensystem 350 wird ein Transformator 500 platziert. Während des Transports kann der Transformator über die Transformatorsicherungen 360 gehalten werden. Optional sind die Transformatorrollsperren 375 (außer beim Transport) fest montiert. Mittels einer Umlenkrolle 370 und einem entsprechenden Seil kann der Transformator ins Innere des Brandschutzmoduls gezogen werden.

In dem Brandschutzmodul 300 ist ebenfalls eine Schaltanlage 600 vorgesehen.

Das Brandschutzmodul 300 kann optional einen Lüfter 800 aufweisen, welcher Zuluft zur Transformatorkühlung ansaugt und warme Luft wieder abgibt.

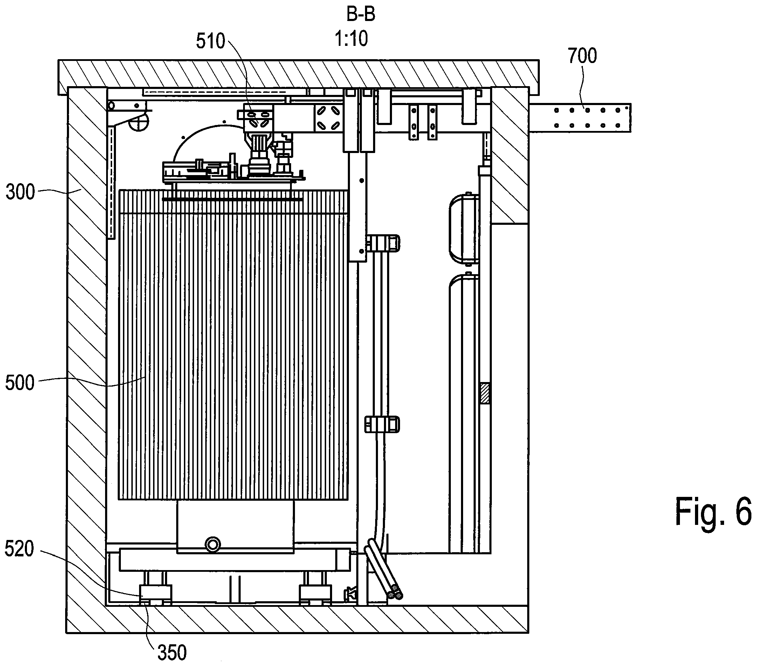

Fig. 6 zeigt eine weitere Schnittansicht des Brandschutzmoduls 300 gemäß dem dritten Ausführungsbeispiel. Auf dem Boden des Brandschutzmoduls ist ein Schienensystem 350 vorgesehen, welches Rollen 520 eines Transformators 500 aufnehmen kann. An der Oberseite des Transformators 500 sind elektrische Anschlüsse 510 vorgesehen, welche dazu dienen, mit einer Stromschiene 700 elektrisch gekoppelt zu werden. Die Stromschiene 700 führt dann aus dem Brandschutzmodul heraus.

Der Brandschutzabschluss 340, 390 dient dazu, die elektrischen Kabel und/oder das elektrische Stromschienensystem 700 aus dem Inneren des Brandschutzmoduls nach außen zu führen. Hierbei ist der Brandschutzabschluss 340, 390 derart ausgestaltet, dass er zumindest zeitweilig eine thermische Entkopplung zwischen dem inneren und äußeren Bereich des Brandschutzmoduls vorsehen kann. Dies wird dadurch erreicht, dass ein Brandschutzverguss aus einem thermisch isolierenden Material im Bereich des Brandschutzabschlusses 390 vorgesehen ist. Das Material des Brandschutzvergusses umgibt die elektrischen Kabel und/oder das elektrische Stromschienensystem 700, 701 und dichtet den Brandschutzabschluss 390 ab. Somit umgibt der Brandschutzverguss einen Abschnitt 701 des Stromschienensystems, das durch den Brandschutzabschluss 390 geführt wird. Oberhalb bzw. außerhalb des Brandschutzmoduls ragt ein Abschnitt 702 der Stromschienen 702 heraus. Die voneinander beanstandeten Stromschienen 701 werden in einem Abschnitt 703 zusammengeführt bzw. liegen aneinander an.

Das Material des Brandschutzvergusses kann z.B. Flammadur 430 darstellen.

Optional kann neben den zwei Öffnungen 102e und 102f eine weitere Öffnung in der Turmwandung vorgesehen sein. Zwischen der weiteren Öffnung und dem Brandschutzmodul kann ein Lüftungskanal vorgesehen sein. Dieser Kanal sowie die weitere Öffnung dienen insbesondere dazu, einen beispielsweise auf Grund einer Explosion in dem Brandschutzmodul entstandenen Überdruck nach außen abzuleiten. Vorzugsweise befindet sich die Höhe der weiteren Öffnung beispielsweise mindestens in Höhe von drei Metern oberhalb des Bodens. Damit kann sichergestellt sein, dass auch wenn sich eine Person in der Nähe der weiteren Öffnung befindet, diese Person nicht durch plötzlich aus der weiteren Öffnung austretende Gase verletzt wird. Somit kann die Sicherheit des Brandschutzmoduls weiter verbessert werden.

Ferner kann innerhalb des Brandschutzmoduls optional eine Brandlöscheinheit vorgesehen sein. Diese kann dazu dienen, einen innerhalb des Brandschutzmoduls entstandenen Brand zu löschen.

## Patentansprüche

1. Windenergieanlage, mit
einem Turm (102) mit mindestens einem unteren Turmsegment (102a),
einem vorab gefertigten Brandschutzmodul (300), das einen Transformator (500) brandsicher aufnimmt,
wobei das Brandschutzmodul (300) innerhalb des unteren Turmsegments (102b) platziert ist,
wobei das Brandschutzmodul (300) als Betonfertigteil ausgestaltet ist und zusammen mit dem Transformator (500) transportierbar ist,
wobei das Brandschutzmodul (300) ein Transportsicherungssystem (360, 375) zur Sicherung des Transformators (500) innerhalb des Brandschutzmoduls (300) während eines Transports des Brandschutzmoduls (300) aufweist.

2. Windenergieanlage nach Anspruch 1, wobei
das Brandschutzmodul (300) eine erste Öffnung (320) für einen Austausch des Transformators (500) und eine zweite Öffnung (330) für Servicepersonal aufweist.

3. Windenergieanlage nach Anspruch 1 oder 2, wobei
das Brandschutzmodul (300) mindestens einen Brandschutzabschluss (340, 390) für elektrische Kabel und/oder ein elektrisches Stromschienensystem aufweist.

4. Windenergieanlage nach einem der Ansprüche 1 bis 3, wobei
das Brandschutzmodul (300) ein Transformatortransportschienensystem (350) aufweist.

5. Windenergieanlage nach Anspruch 3, oder nach den Ansprüchen 3 und 4, wobei
die elektrischen Kabel und/oder das elektrische Stromschienensystem (700) durch den Brandschutzabschluss (340, 390) geführt sind und der Brandschutzabschluss (340, 390) einen Brandschutzverguss aus einem thermisch isolierenden Material zur zumindest zeitweisen thermischen Entkopplung aufweist.

6. Windenergieanlage nach einem der Ansprüche 1 bis 5, wobei
ein Kanal zwischen dem Inneren des Brandschutzmoduls (300) und einer Öffnung in einer Turmwandung des Turms zum Ablassen eines großen Überdruckes innerhalb des Brandschutzmoduls vorgesehen ist.

## Claims

1. A wind power installation comprising
a pylon (102) having at least one lower pylon segment (102a),
a previously manufactured fire protection module (300) for receiving a transformer (500) in fire-resistant relationship,
wherein the fire protection module (300) is placed within the lower pylon segment (102b),
wherein the fire protection module is configured as a precast concrete component and can be transported together with the transformer (500),
wherein the fire protection module (300) has a transport securing system (360, 375) for securing the transformer (500) within the fire protection module (300) during a transport operation of the fire protection module (300).

2. A wind power installation according to claim 1 wherein the fire protection module (300) has a first opening (320) for replacement of the transformer (500) and a second opening (330) for service personnel.

3. A wind power installation according to claim 1 or claim 2 wherein the fire protection module (300) has at least one fire protection termination means (340, 390) for electric cables and/or an electric bus bar system.

4. A wind power installation according to one of claims 1 to 3 wherein the fire protection module (300) has a transformer transport rail system (350).

5. A wind power installation according to claim 3 or according to the claims 3 and 4 wherein the electric cables and/or the electric bus bar system (700) are passed through the fire protection termination means (340, 390) and the fire protection termination means (340, 390) has a fire protection casting sealant comprising a thermally insulating material for thermal decoupling at least at times.

6. A wind power installation according to any one of the claims 1 to 5 wherein a passage is provided between the interior of the fire protection module (300) and an opening in a pylon wall of the pylon for letting off a greatly increased pressure within the fire protection module.

## Revendications

1. Eolienne, avec
un mât (102) avec au moins un segment de mât inférieur (102a),
un module de protection contre le feu (300) fabriqué au préalable qui reçoit un transformateur (500) de manière ignifuge,
dans laquelle le module de protection contre le feu (300) est placé dans le segment de mât inférieur (102b),
dans laquelle le module de protection contre le feu (300) est configuré comme une partie préfabriquée en béton et peut être transporté conjointement avec le transformateur (500),
dans laquelle le module de protection contre le feu (300) présente un système de protection contre le transport (360, 375) pour la protection du transformateur (500) dans le module de protection contre le feu (300) pendant un transport du module de protection contre le feu (300).

2. Eolienne selon la revendication 1, dans laquelle
le module de protection contre le feu (300) présente une première ouverture (320) pour un remplacement du transformateur (500) et une seconde ouverture (330) pour le personnel de service.

3. Eolienne selon la revendication 1 ou 2, dans laquelle
le module de protection contre le feu (300) présente au moins une bordure de protection contre le feu (340, 390) pour des câbles électriques et/ou un système de rails conducteurs électrique.

4. Eolienne selon l'une des revendications 1 à 3, dans laquelle
le module de protection contre le feu (300) présente un système de rails de transport de transformateur (350).

5. Eolienne selon la revendication 3 ou selon les revendications 3 et 4, dans laquelle
les câbles électriques et/ou le système de rails conducteurs électrique (700) sont guidés au travers de la bordure de protection contre le feu (340, 390) et la bordure de protection contre le feu (340, 390) présente un scellement de protection contre le feu en un matériau thermo-isolant pour le découplage thermique au moins temporaire.

6. Eolienne selon l'une des revendications 1 à 5, dans laquelle
un canal entre l'intérieur du module de protection contre le feu (300) et une ouverture dans une paroi de mât du mât est prévu pour l'échappement d'une grande surpression dans le module de protection contre le feu.
